# EUROPEAN PATENT SPECIFICATION

(11) **EP 0 939 261 B1**
(45) Date of publication and mention of the grant of the patent: **23.04.2003**
(21) Application number: 99102750.9
(22) Date of filing: 22.02.1999
(51) Int. Cl.: F16L 11/16, F16L 9/16

(54) **Laminar-flow flexible metal hose and method for manufacturing the same**
Flexibler Metallschlauch mit laminarer Strömung und Verfahren zu seiner Herstellung
Tuyau flexible métallique à écoulement laminaire et méthode pour sa fabrication

(30) Priority: 26.02.1998 IT TO980151
(43) Date of publication of application: 01.09.1999
(73) Proprietor: Castelli, Sergio, I-10146 Torino (IT)
(72) Inventor: Castelli, Sergio, I-10146 Torino (IT)
(74) Representative: Modiano, Guido, Dr.-Ing.

(56) References cited:
- DD-A- 64 416
- DE-A- 2 645 946
- DIPL.-ING- JOHANN WROBEL UND DIPL.-ING. FRIEDRICH EITEL: "Gewickelte und gewellte Metallschläuche - Auslegung, Herstellung und Einsatzmöglichkeiten" 3R INTERNATIONAL, vol. 26, no. 6, July 1987 (1987-07) - August 1987 (1987-08), pages 406-411, XP002101629 Essen, DE

## Description

The present invention relates to a laminar-flow flexible metal hose and to a method for manufacturing it.

It is known that flexible metal hoses have a plurality of parallel or helical undulations which are obtained by way of different methods and mainly by corrugation or continuous roll formation.

The internal surface of said hoses, like the external surface, is therefore discontinuous, since it is formed by a plurality of crests separated by interposed grooves.

This marked discontinuity is a considerable limitation for the use of the hoses in conveying fluids flowing at high speed.

The discontinuity of the internal surface of the hose, in addition to causing significant load losses due to the turbulent flow generated by contact between the fluid and the hose, in fact generates vibrations due to pulses produced in the stream of fluid. These pulses, in addition to producing particularly unpleasant sound waves, mechanically stress the hose, which can start resonating with the period of said pulses and easily exceed its fatigue failure limit.

In order to obviate these drawbacks, it is known to insert in the corrugated hose a second hose which does not have containment functions but has a flat internal wall and is adapted to even out the discontinuities of the corrugated hose wherein it is contained; a corrugated hose of this type is known to the skilled in the field as laminar-flow hose.

However, this conventional solution, applied mainly in flexible hoses with parallel undulations, is complicated and expensive, significantly reduces the flexibility and useful cross-section of the corrugated hose and does not fully solve the above-mentioned damaging effects.

Another conventional solution, which however can be applied only to flexible hoses with helical undulations, consists in introducing a metal wire in the internal grooves of the corrugated hose during the continuous formation of the hose.

This conventional system for manufacturing laminar-flow flexible hoses also suffers, to a partial extent, the above-mentioned drawbacks; in particular, it significantly increases the production costs of the hose and significantly reduces its flexibility without however ensuring a fully satisfactory stabilization of the stream of fluid that circulates inside the hose.

Another known solution is provided in document DE 26 45 946 A, which discloses a corrugated hose formed by helically winding a profiled metal element to produce a hose with a flat internal surface due to the provision of extension flaps connected to the element in the axial direction. However, these extension flaps are welded to the corrugations of the wall of the hose, which restricts the movement of the extension flaps in the axial direction and thus limits the axial flexibility of the hose.

The aim of the present invention is to eliminate the drawbacks of the afore-mentioned types of laminar-flow flexible metal hose.

Within the scope of this aim, an object of the present invention is to provide a laminar-flow flexible metal hose which does not require the adoption of additional elements, such as the second hose or the metal wire, which are adapted to even out the discontinuities of the internal surface of the flexible hose and is economically advantageous and obtainable with a continuous manufacturing process.

A further object of the invention is to provide a laminar-flow flexible metal hose which has high-level characteristics in terms of flexibility and resistance and at the same time has an internal surface which is substantially continuous or is in any case such that it does not generate appreciable load losses and/or pulsing in the fluid stream that passes through said hose.

A further object of the invention is to provide a laminar-flow flexible metal hose with high-level mechanical characteristics, particularly a high ability to absorb axial flexural stresses.

This aim, these objects and others which will become apparent hereinafter from the following detailed description, are achieved with a laminar-flow flexible metal hose and a corresponding manufacturing process, having the specific characteristics stated in the appended claims.

The invention is substantially based on the concept of producing the hose starting from a continuous metal profiled element which has a cylindrical cross-section defined by a flat base formed by two straight flaps of the profiled element, and by at least one curved portion which protrudes from the base and connects the flaps, and of winding the continuous profiled element in contiguous turns according to the generatrices of a cylindrical helix, so that the flat base of the profiled element forms the inner surface of the laminar-flow hose and so that the curved portion that protrudes from the base forms the outer surface with helical undulations of the hose.

According to the invention, the contiguous turns of the profiled element are then mutually connected hermetically by continuous welding of the adjacent edges of the flat bases of the contiguous turns. The flaps of the profiled element that form the flat base preferably mutually overlap and can slide with respect to each other in order to give the finished hose the necessary axial flexibility, which is allowed by the corresponding elastic deformability of the curved portion that connects the overlapping flaps of the profiled element.

Further characteristics and advantages of the flexible metal hose and of the corresponding manufacturing method according to the invention will become apparent from the following detailed description and with reference to the accompanying drawings, given by way of non-limitative example, wherein:
Figure 1 is a perspective view of a length of a continuous metal profiled element that constitutes, by winding in helical turns, the laminar-flow flexible metal hose according to the present invention;
Figure 2 is a partially sectional elevation view of the laminar-flow flexible metal hose obtained with the profiled element of Figure 1;
Figures 3 and 4 are transverse sectional views of metal profiled elements according to further embodiments of the invention.

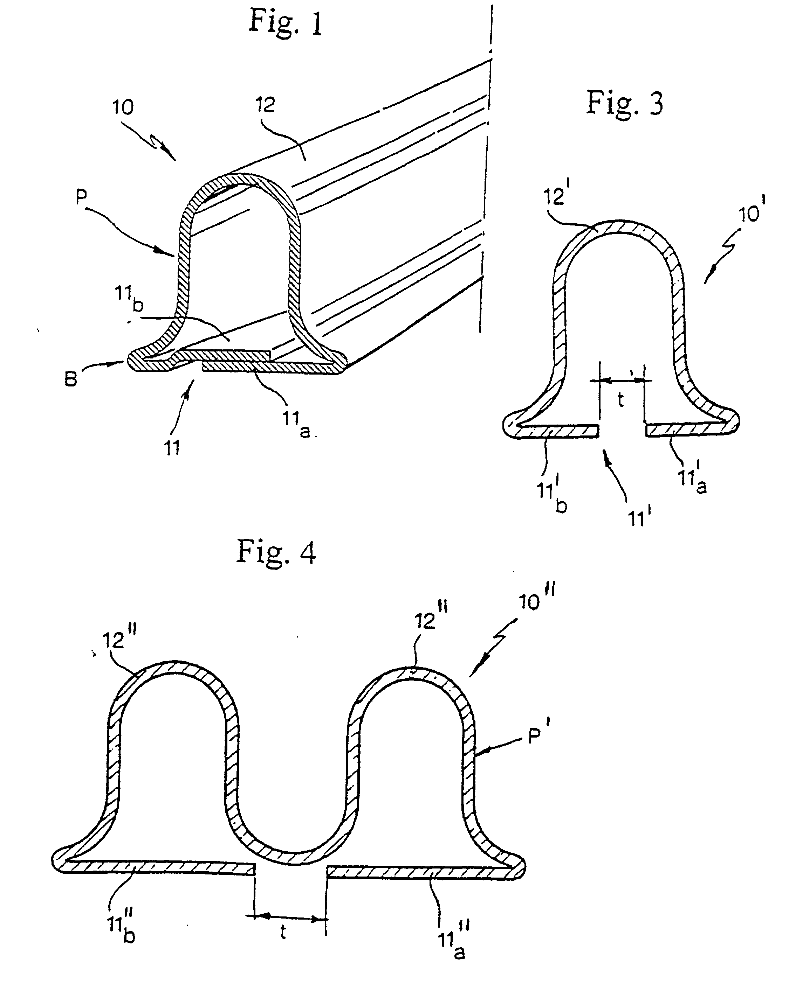

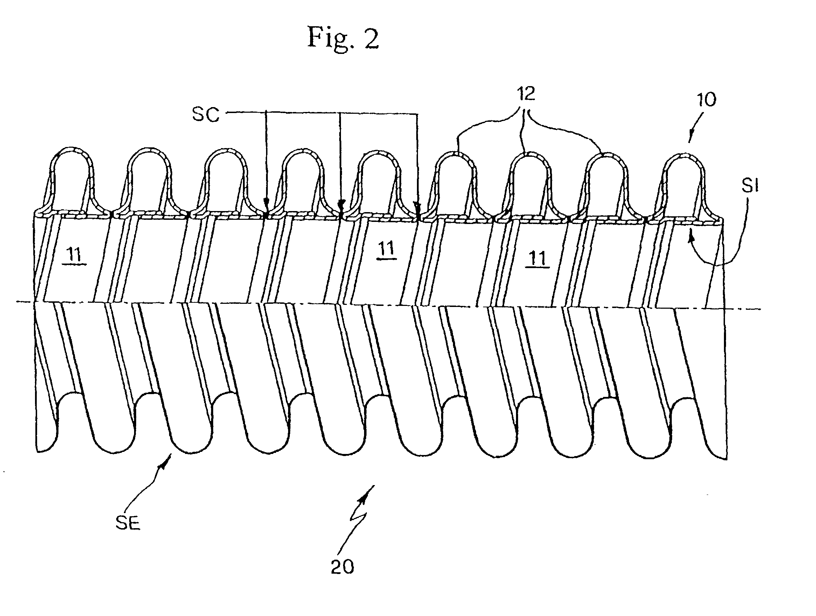

Initially with reference to Figure 1, the reference numeral 10 designates a continuous profiled element made of a suitable metal alloy whose cross-section has a cylindrical profile P characterized by a flat base 11 and by a curved portion 12 protruding from the flat base. The base is formed by two straight flaps 11a and 11b of the profiled element which mutually overlap so as to allow mutual sliding, and the arrangement accordingly allows the elastic deformation of the curved portion 12 of the profiled element both in the direction that corresponds to a narrowing of the flat base 11 and in the direction that corresponds to a widening thereof. The profiled element 10 is preferably obtained by continuous roll formation starting from a continuous metal strip whose transverse dimensions are equal to the full perimeter of the profile P, including the straight flaps 11a and 11b.

In Figure 2, the reference numeral 20 designates a laminar-flow flexible metal hose which is obtained by winding, according to the invention, the continuous profiled element 10 of Figure 1 in contiguous turns according to the generatrices of a cylindrical helix which has the inside diameter of the finished hose.

As clearly shown in the figure, the profiled element 10 is wound, by means of an internal mandrel and/or rollers (not shown), so that its flat base 11 forms an internal surface- SI and so that its curved portion 12 forms an external surface SE with helical undulations of the laminar-flow hose 20. The internal surface SI of the hose 20 is thus substantially continuous and cylindrical, while the external surface SE, which is undulated, gives the necessary axial flexibility to the hose.

The contiguous turns of the profiled element 10 wound in a helical configuration are then mutually hermetically connected by a continuous weld SC which joins adjacent edges B of the flat bases 11 (Figure 1) of the contiguous turns. Preferably, the continuous weld SC is of the autogenous type without added material and is obtained by means of one of the conventional welding processes suitable for the purpose, such as laser welding, microplasma welding, or the like.

It should be observed that the axial flexibility of the laminar-flow hose 20 according to the invention is given to the hose by the corresponding elastic deformability of the curved portion 12 of the profiled element 10 which forms the corrugation of the hose. Such deformability is allowed in turn by the mutual sliding of the overlapping flaps 11a and 11b of the base 11 of the profiled element.

The embodiment of Figure 3 relates to a profiled element 10' which differs from the above-described profiled element 10 in that the flaps 11'a and 11'b that form the base 11' are co-planar instead of mutually overlapping and are mutually separated by an extent t which allows their mutual approach and the consequent elastic deformation of the curved portion 12'.

In the embodiment of Figure 4, the co-planar flaps 11"a and 11"b of the profiled element 10", also separated by an extent t, are instead connected by means of a composite curved portion which is formed by two protruding undulations 12" which are separated by a groove at which the flaps 11"a-b end in order to form a substantially closed profile P'.

## Claims

1. A laminar-flow flexible metal hose (20), constituted by a continuous metal profiled element (10; 10'; 10") which has a cylindrical cross-section and is wound in contiguous cylindrical helical turns which are mutually hermetically connected by continuous welding (SC); wherein said profiled element (10) has, in cross-section, a flexible profile (P;P') with a flat base (11;11';11'') formed by two straight flaps (11a,11b;11'a,11'b;11''a,11''b) of the profiled element and at least one curved portion (12;12';12") protruding from said base and connecting said straight flaps; and said profiled element (10;10';10'') is wound so that said flat base (11;11';11") of the profile (P;P') forms an internal cylindrical surface (SI) of the laminar-flow hose (20) and said curved portion (12) of the profile (P;P') forms an external surface (SE) with helical undulations of said hose (20).

2. The flexible metal hose according to claim 1, **characterized in that** said straight flaps (11a,11b) of the flat base (11) of the profiled element (10) mutually overlap so that they can mutually slide one over the other.

3. The flexible metal hose according to claim 1, **characterized in that** the straight flaps (11'a,11'b;11''a,11''b)) of the flat base (11';11'') are co-planar, mutually juxtaposed and separated by an extent (t) which allows their mutual approach and the consequent elastic deformation of said curved portion (12';12").

4. The flexible metal hose according to claim 1, **characterized in that** said curved portion (12;12';12'') is formed by a protruding undulation.

5. The flexible metal hose according to claim 1, **characterized in that** said curved portion is formed by two protruding undulations (12'') separated by a groove.

6. The flexible metal hose according to claim 1, **characterized in that** the contiguous turns of the profiled element (10;10';10'') wound in a cylindrical helical shape are mutually hermetically connected by continuous welding of the adjacent edges (B) of the flat bases (11;11';11'') of said contiguous turns.

7. The flexible metal hose according to claim 6, **characterized in that** said continuous welding is of the autogenous type.

8. The flexible metal hose according to claim 1, **characterized in that** said continuous metal profiled element (10;10';10'') is obtained by roll formation starting from a metal alloy strip whose transverse dimensions are equal to the full perimeter of the profile (P;P'), including said straight flaps (11a,11b;11'a,11'b; 11"a, 11"b).

9. A method for manufacturing laminar-flow flexible metal hoses (20) according to the preceding claims, comprising the steps of:
continuously forming a cylindrical metal profiled element (10;10';10'') which has, in cross-section, a profile (P;P') with a substantially flat base (11;11';11'') formed by two straight flaps (11a,11b;11'a,11'b;11''a,11''b) of said profiled element, and a curved portion (12;12';12'') protruding from said base and connecting said flaps;
winding said profiled element (10;10';10'') in contiguous cylindrical helical turns, so that the substantially flat base (11;11';11'') of the profiled element (10;10';10'') forms an internal cylindrical surface (SI) of the laminar-flow hose (20) and said curved portion (12;12') of the profiled element (10;10') forms an outer surface (SE) with helical undulations of said hose (20);
mutually hermetically connecting the contiguous cylindrical helical turns of the wound profiled element (10;10';10'') by continuous welding (SC) of said turns along the mutual contact edge (B).

10. The method according to claim 9, **characterized in that** said metal profiled element (10;10';10'') is formed by roll forming.

11. The method according to claim 9, **characterized in that** the profiled element (10;10';10") is wound in a helical pattern by means of a mandrel and/or rollers.

12. The method according to claim 9, **characterized in that** the continuous welding (SC) of the contiguous turns of profiled element (10;10';10'') wound in a helical configuration is of the autogenous type.

13. The method according to claims 9 and 12, **characterized in that** the continuous welding (SC) of the contiguous turns of profiled element (10;10';10'') wound in a helical configuration is laser welding.

14. The method according to claims 9 and 12, **characterized in that** the continuous welding (SC) of the contiguous turns of the profiled element (10;10';10'') wound in a helical configuration is microplasma welding.

## Patentansprüche

1. Flexibler Metallschlauch (20) für eine laminare Strömung, gebildet aus einem ununterbrochenen Metallelement mit einem Profil (10;10';10"), das einen zylindrischen Querschnitt aufweist und zu aneinander hängenden zylindrischen spiralförmigen Windungen gewunden ist, die gegenseitig durch fortlaufendes Schweißen (SC) verbunden sind, wobei das Element mit einem Profil (10) im Querschnitt ein flexibles Profil (P;P') mit einer flachen Basis (11;11';11"), die durch zwei gerade Klappen (11a, 11b; 11'a, 11'b; 11"a,11"b) des Elementes mit einem Profil und wenigstens einem gekrümmten von der Basis hervorstehenden und die geraden Klappen verbindenden Abschnitt (12;12';12") gebildet wird und wobei das Element mit einem Profil (10;10';10") so gewunden ist, dass die flache Basis (11;11';11") des Profils (P;P') eine zylindrische Innenfläche (SI) des Metallschlauches (20) für eine laminare Strömung bildet und dass der gekrümmte Abschnitt (12) des Profils (P;P') eine äußere Oberfläche (SE) mit einer spiralförmigen Welligkeit des Schlauches (20) bildet.

2. Flexibler Metallschlauch gemäß Anspruch 1, **dadurch gekennzeichnet, dass** sich die geraden Klappen (11a,11b) der flachen Basis (11) des Elements (10) mit einem Profil gegenseitig überlappen, so dass sie gegenseitig übereinander gleiten.

3. Flexibler Metallschlauch gemäß Anspruch 1, **dadurch gekennzeichnet, dass** die geraden Klappen (11'a,11'b;11"a,11"b) der flachen Basis (11';11") koplanar, gegenseitig nebeneinander gesetzt und durch eine Weite (t) voneinander getrennt sind, was ihre gegenseitige Annäherung und die sich daraus ergebende elastische Verformung des gekrümmten Abschnitts (12';12") ermöglicht.

4. Flexibler Metallschlauch gemäß Anspruch 1, **dadurch gekennzeichnet, dass** der gekrümmte Abschnitt (12;12';12") durch hervorstehende Wellen gebildet wird.

5. Flexibler Metallschlauch gemäß Anspruch 1, **dadurch gekennzeichnet, dass** der gekrümmte Abschnitt durch zwei hervortretende von einer Furche getrennte Wellenberge (12) gebildet wird.

6. Flexibler Metallschlauch gemäß Anspruch 1, **dadurch gekennzeichnet, dass** die aneinander hängenden zu einer zylindrischen spiralförmigen Form gewundenen Windungen des Elementes mit einem Profil (10;10';10") gegenseitig hermetisch durch ununterbrochenes Schweißen der angrenzenden Kanten (B) der flachen Basen (11;11';11") der aneinander hängenden Windungen verbunden sind.

7. Flexibler Metallschlauch gemäß Anspruch 6, **dadurch gekennzeichnet, dass** das ununterbrochene Schweißen ein autogenes Schweißen ist.

8. Flexibler Metallschlauch gemäß Anspruch 1, **dadurch gekennzeichnet, dass** das ununterbrochene Metallelement mit einem Profil (10;10';10") durch eine Rollenbildung erhalten wird, die mit einem Metalllegierungsstreifen, dessen transversale Abmessungen einschließlich der geraden Klappen (11a, 11b; 11'a, 11'b; 11"a, 11"b) gleich dem vollen Umfang des Profils (P;P') sind, beginnt.

9. Verfahren zur Herstellung eines flexiblen Metallschlauches (20) für eine laminare Strömung gemäß den vorangehenden Ansprüchen umfassend die Schritte des:
Kontinuierlichen Bildens eines zylindrischen Metallelementes mit einem Profil (10;10';10"), das im Querschnitt ein Profil (P;P') mit einer im Wesentlichen flachen, durch zwei gerade Klappen (11a, 11b; 11'a, 11'b; 11"a, 11"b) des Elementes mit einem Profil und einem gekrümmten von der Basis hervortretenden und die Klappen verbindenden Abschnitt (12;12';12") gebildeten flachen Basis (11;11';11") aufweist;
Wickelns des Elementes mit Profil (10;10';10") zu aneinander hängenden zylindrischen spiralförmigen Windungen, so dass die im Wesentlichen flache Basis (11;11';11") des Elementes (10;10';10") mit einem Profil eine zylindrische Innenfläche (SI) des Schlauches für eine laminare Strömung (20) bildet und dass der gekrümmte Abschnitt (12,12') des Elementes mit einem Profil (10;10') eine äußere Oberfläche (SE) mit einer spiralförmigen Welligkeit des Metallschlauches (20) bildet;
Gegenseitigen hermetischen Verbindens der aneinander hängenden zylindrischen spiralförmigen Windungen des gewickelten Elementes mit Profil (10;10';10") durch ununterbrochenes Schweißen (SC) der Windungen entlang der gemeinsamen Berührungskante (B).

10. Verfahren gemäß Anspruch 9, **dadurch gekennzeichnet, dass** das Metallelement mit einem Profil (10;10';10") durch eine Rollenbildung geformt wird.

11. Verfahren gemäß Anspruch 9, **dadurch gekennzeichnet, dass** das Element mit Profil (10;10';10") zu einer spiralförmigen Form mittels eines Dorns und/oder mittels Walzen gewickelt wird.

12. Verfahren gemäß Anspruch 9, **dadurch gekennzeichnet, dass** das ununterbrochene Schweißen (SC) der aneinander hängenden zu einer spiralförmigen Form gewundenen Windungen des Elements mit Profil (10; 10'; 10") ein autogenes Schweißen ist.

13. Verfahren gemäß der Ansprüche 9 und 12, **dadurch gekennzeichnet, dass** das ununterbrochene Schweißen (SC) der zu einer spiralförmigen Form gewundenen aneinander hängenden Windungen des Elementes mit einem Profil (10;10';10") ein Laserschweißen ist.

14. Verfahren gemäß der Ansprüche 9 und 12, **dadurch gekennzeichnet, dass** das ununterbrochene Schweißen (SC) der zu einer spiralförmigen Form gewundenen aneinander hängenden Windungen des Elementes mit einem Profil (10;10';10") ein Schweißen mit einem Mikroplasma ist.

## Revendications

1. Un tuyau métallique flexible (20) à écoulement laminaire, formé par un élément profilé (10; 10',10") métallique continu, ayant une section transversale cylindrique et enroulé en des spires hélicoïdales cylindriques contigues reliées de façon mutuellement hermétique par un soudage continu (SC); dans lequel ledit élément profilé (10) a, observé en coupe transversale, un profil flexible (P; P') ayant une base (11; 11'; 11") plate formée de deux volets (11a, 11b; 11'a, 11'b; 11"a, 11"b) rectilignes de l'élément profilé et au moins une partie incurvée (12; 12'; 12") faisant saillie depuis ladite base et connectant lesdits lesdits volets rectilignes; et ledit élément profilé (10; 10'; 10") étant enroulé de manière que ladite base plate (11; 11'; 11") du profilé (P; P') forme une surface cylindrique (SI) interne du tuyau à écoulement laminaire (20) et que ladite partie incurvée (12) du profilé (P; P') forme une surface externe (SE) avec les ondulations hélicoïdales dudit tuyau (20).

2. Le tuyau métallique flexible selon la revendication 1, **caractérisé en ce que** lesdits volets (11a, 11b) rectilignes de la base plate (11) de l'élément profilé (10) se chevauchent mutuellement de manière à pouvoir coulisser mutuellement les uns au-dessus des autres.

3. Le tuyau métallique flexible selon la revendication 1, **caractérisé en ce que** les volets (11'a, 11'b; 11"a, 11"b) rectilignes de la base plate (11'; 11") sont coplanaires, mutuellement juxtaposés et séparés d'une distance (t) permettant leur rapprochement mutuel et la déformation élastique consécutive de ladite partie incurvée (12'; 12").

4. Le tuyau métallique flexible selon la revendication 1, **caractérisé en ce que** ladite partie incurvée (12; 12'; 12") est formée par une ondulation en relief.

5. Le tuyau métallique flexible selon la revendication 1, **caractérisé en ce que** ladite partie incurvée est formée par deux ondulations (12") en relief, séparées par une gorge.

6. Le tuyau métallique flexible selon la revendication 1, **caractérisé en ce que** les spires contigues de l'élément profilé (10; 10'; 10") enroulées en une forme hélicoïdale cylindrique sont mutuellement connectées de façon hermétique par un soudage continu des bords (B) adjacents des bases (11; 11'; 11") plates desdites spires contigues.

7. Le tuyau métallique flexible selon la revendication 6, **caractérisé en ce que** ledit soudage continu est du type autogène.

8. Le tuyau métallique flexible selon la revendication 1, **caractérisé en ce que** ledit élément profilé (10; 10'; 10") métallique continu est obtenu par formation par roulage, en commençant à partir d'une bande d'alliage métallique dont les dimensions transversales sont identiques au périmètre complet du profilé (P; P') incluant lesdits volets (11a, 11b; 11'a, 11'b; 11''a, 11''b) rectilignes.

9. Un procédé de fabrication de tuyaux métalliques (20) flexibles à écoulement laminaire selon les revendications précédentes, comprenant les étapes consistant à :
former de façon continue un élément profilé (10; 10'; 10") métallique cylindrique ayant, observé en vue en coupe, un profilé (P, P') qui est une base (11; 11'; 11") sensiblement plate, formée par deux volets rectilignes (11a, 11b; 11'a, 11'b; 11"a, 11"b) dudit élément profilé, et une partie incurvée (12; 12'; 12") faisant saillie depuis ladite base et reliant lesdits volets;
enrouler ledit élément profilé (10; 10'; 10") en des spires hélicoïdales cylindriques contigues de manière que la base (11; 11'; 11") sensiblement plate de l'élément profilé (10; 10'; 10") forme une surface cylindrique interne (SI) du tuyau à écoulement laminaire (20) et que ladite partie incurvée (12; 12') de l'élément profilé (10; 10') forme une surface extérieure (SE) avec les ondulations hélicoïdales dudit tuyau (20);
effectuer la connexion hermétique mutuelle des spires hélicoïdales cylindriques contigues de l'élément profilé (10; 10'; 10") enroulé par un soudage continu (SC) desdites spires le long dudit bord (B) de contact mutuel;

10. Le procédé selon la revendication 9, **caractérisé en ce que** ledit élément profilé (10; 10'; 10") métallique est formé par un processus de formage par roulage.

11. Le procédé selon la revendication 9, **caractérisé en ce que** l'élément profilé (10; 10';10") est enroulé en un motif hélicoïdal en utilisant un mandrin et/ou des galets.

12. Le procédé selon la revendication 9, **caractérisé en ce que** le soudage continu (SC) des spires contigues de l'élément profilé (10; 10'; 10") enroulé en configuration hélicoïdale est de type autogène.

13. Le procédé selon les revendications 9 et 12, **caractérisé en ce que** le soudage continu (SC) des spires contigues de l'élément profilé (10; 10'; 10") enroulé en une configuration hélicoïdale, est un soudage au laser.

14. Le procédé selon les revendications 9 et 12, **caractérisé en ce que** le soudage continu (SC) des spires contigues de l'élément profilé (10; 10'; 10"), enroulé en une configuration hélicoïdale, est un soudage au micro-plasma.
